# EUROPEAN PATENT SPECIFICATION

(11) **EP 3 253 966 B1**
(45) Date of publication and mention of the grant of the patent: **30.09.2020**
(21) Application number: 16713062.4
(22) Date of filing: 04.02.2016
(51) Int. Cl.: F03D 80/00, F03D 80/80

(54) **WIND TURBINE NACELLE ASSEMBLY AND WIND TURBINE COMPRISING SUCH A NACELLE ASSEMBLY**
WINDTURBINENGONDELANORDNUNG UND WINDTURBINE MIT SOLCH EINER GONDELANORDNUNG
ENSEMBLE NACELLE D'ÉOLIENNE, ET ÉOLIENNE COMPRENANT UN TEL ENSEMBLE NACELLE

(30) Priority: 04.02.2015 IT MI20150149
(43) Date of publication of application: 13.12.2017
(73) Proprietor: WINDFIN B.V., 2451 VW Leimuiden (NL)
(72) Inventor: BUSTREO, Paolo, 39100 Bolzano (IT); TOCCOLI, Paolo, 39100 Bolzano (IT); CASAZZA, Matteo, 39049 Valdi Vizze (IT)
(74) Representative: Eccetto, Mauro
(86) International application number: PCT/IB2016/050571
(87) International publication number: WO 2016/125099

(56) References cited:
- WO-A1-2012/122989
- WO-A2-2010/089006
- DE-A1-102011 103 311
- US-A1- 2011 285 143
- US-A1- 2015 016 976

## Description

### TECHNICAL FIELD

The present invention relates to a wind turbine nacelle assembly.

In particular, the present invention relates to a nacelle assembly rotating at the top of a vertical support and supporting an electrical generator and a blade assembly.

### BACKGROUND ART

Known nacelle assemblies are characterized by comprising supporting structures defining a protective compartment for housing sensitive parts of the wind turbine, and enabling access to the protective compartment to the personnel assigned to the control and maintenance of the wind turbine, as well as enabling the transport of spare parts through the protective compartment.

On the one hand, a large nacelle assembly is therefore necessary to define a spacious enough protective compartment, while on the other hand it is necessary to limit the weight and bulk of the nacelle assembly.

Nacelles are disclosed in US 2011/285143 A1, DE 10 2011 103311 A1, US 2015/016976 A1 and WO 2010/089006 A2.

### DISCLOSURE OF INVENTION

The aim of the present invention is to provide a nacelle assembly combining the aforesaid conflicting requirements. The present invention provides a wind turbine nacelle assembly, the nacelle assembly rotating at the top of a vertical support and supporting an electrical generator and a blade assembly and comprising a supporting structure to transfer loads between the blade assembly and the vertical support and to define a first protective compartment for housing sensitive parts of the wind turbine; and a platform integral with the supporting structure and defining a floor and a second protective compartment for housing further sensitive parts of the wind turbine; and comprising a plurality of cogwheels housed in the second protective compartment and engaging an annular gear which projects into the second protective compartment and is integral with the vertical support.

This gives an easy access to the outer surface of the supporting structure and of the electric generator, the size of the supporting structure can be relatively small and a first and a second protective compartment for housing sensitive parts of the wind turbine are available. In particular, the supporting structure is configured as a capsule and includes a first opening delimited by a flange to connect the electric generator to the supporting structure.

The compact shape of the supporting structure is open towards the generator to enable access to the electric generator.

In particular, the supporting structure comprises a second opening to enable access to the first protective compartment from the vertical support; and a third opening to enable access to the first protective compartment from the platform floor.

The vertical support and the support structure give thus access to the platform.

In particular, the supporting structure comprises supporting walls, said supporting walls being preferably made by casting.

In this way, the supporting structure can have a high structural strength and the desired shape.

In particular, the supporting structure comprises a plurality of connection interfaces extending in the protective compartment and out of the protective compartment.

The connection interfaces support the equipment and devices arranged both in the protective compartment and out of the supporting structure. The production of the walls by casting facilitates the creation of the connection interfaces integrated in the walls.

In particular, the supporting structure comprises two plates which extend to the floor surface and support cogwheels and respective actuators.

In this way, the cogwheels are supported by the supporting structure for the benefit of the robustness of the support and, therefore, of the accuracy of their coupling.

In particular, the platform comprises a frame; the floor mounted on the frame; and a covering arranged under the frame, the second protective compartment extending between the floor and the covering.

The second protective compartment has a flat shape and houses sensitive parts such as the cogwheels and the control device for the control and the synchronization of the cogwheels.

In particular, the platform comprises a plurality of additional fastening interfaces configured to fasten the platform to the supporting structure.

A further object of the present invention is to provide a wind turbine able to obviate the drawbacks of the known art.

Therefore, the present invention provides a wind turbine for the production of electrical energy, the wind turbine comprising a vertical support, a nacelle assembly as claimed in any one of the preceding claims, and rotating at the top of the vertical support about a first axis; an electric generator mounted on the nacelle assembly; and a blade assembly rotating with respect to the nacelle assembly about a second axis.

### BRIEF DESCRIPTION OF THE DRAWINGS

Further characteristics and advantages of the present invention will become clear from the following description of a not limiting embodiment, with reference to the figures of the accompanying drawings, in which:
- Figure 1 is a side elevational view, with parts removed for clarity's sake and parts in section, of a wind turbine according to the present invention;
- Figure 2 is an elevational view on an enlarged scale, with parts removed for clarity's sake and parts in section, of the wind turbine of Figure 1;
- Figure 3 is a perspective view on a further enlarged scale, with parts removed for clarity's sake, of a supporting structure of a wind turbine nacelle assembly of Figures 1 and 2; and
- Figure 4 is a perspective view on a reduced scale, with parts removed for clarity's sake and parts in section, of a platform of the wind turbine nacelle assembly of Figures 1 and 2.

### BEST MODE FOR CARRYING OUT THE INVENTION

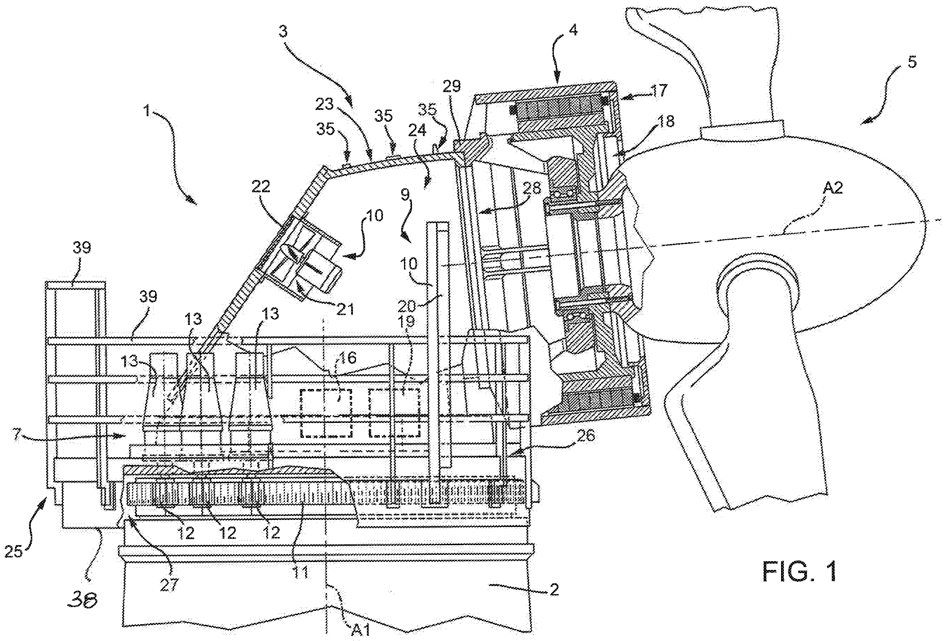

With reference to Figure 1, 1 indicates as a whole a wind turbine, which, in the shown case, is used for the production of electrical energy. The wind turbine 1 comprises a vertical support 2 extending along an axis A1; a nacelle assembly 3 arranged at the top of the vertical support 2 and rotating with respect to the vertical support 2 about the axis A1; an electric generator 4 mounted on the nacelle assembly 3; and a blade assembly 5 rotating with respect to the nacelle assembly 3 about an axis A2.

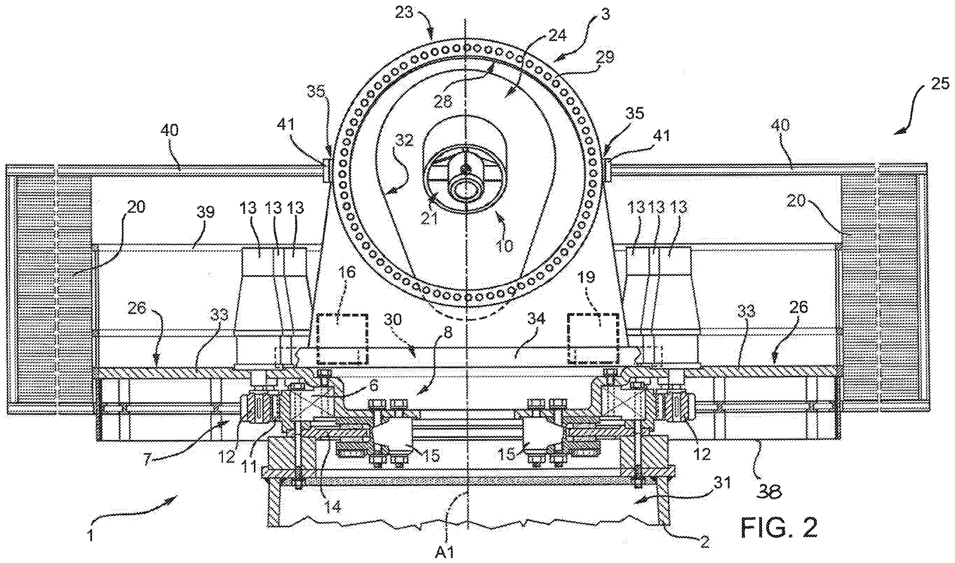

With reference to Figure 2, the wind turbine 1 comprises a fifth wheel 6 arranged between the nacelle assembly 3 and the vertical support 2 to allow an easy rotation of the nacelle assembly 3 about the axis A1. The wind turbine 1 comprises a rotation mechanism 7 for selectively rotating the nacelle assembly 3 with respect to the vertical support 2; and a brake system 8 to stop the rotation of the nacelle assembly 3.

With reference to Figure 1, the wind turbine 1 comprises a liquid cooling system 9 and an air cooling system 10, in particular for cooling the electric generator 4.

In greater detail and with reference to Figures 1 and 2, the rotating mechanism 7 comprises an annular gear 11 integral with the vertical support 2; a plurality of cogwheels 12, which are supported by the nacelle assembly 3, are arranged about the annular gear 11 and are engaged with the annular gear 11; and a plurality of actuators 13, each of them being supported by the nacelle assembly 3 and being configured to rotate a respective cogwheel 12 engaging the annular gear 11.

With reference to Figure 2, the brake system 8 comprises a brake disc 14 integral with the vertical support 2; a plurality of callipers 15, which are configured to tighten the brake disk 14 and are mounted on the nacelle assembly 3; a power unit 16 for supplying the callipers 15 and connecting pipes not shown in the attached figures. In the shown example, the brake disc 14 extends inside, while the annular gear 11 has external teeth.

The electric generator 4 comprises a stator 17 and a rotor 18. The liquid cooling system 9 is configured to cool the stator 17 of the electric generator 4 and comprises a recirculation pump 19; two heat exchangers 20 supported by the nacelle assembly 3; and a circuit, not shown, which extends between the pump 19, the heat exchangers 20 and the stator 17.

With reference to Figure 1, the air cooling system 10 cools in particular the rotor 18 and includes a fan 21 and an air filter 22.

The nacelle assembly 3 comprises a supporting structure 23 to transfer loads between the blade assembly 5 and the vertical support 2 and to define a first protective compartment 24; and a platform 25 integral with the supporting structure 23 and comprising a floor 26 and a protective compartment 27 beneath the floor 26. The supporting structure 23 is configured as a capsule and includes a first opening 28 delimited by a flange 29 for connecting the supporting structure to the electric generator 4 and to the stator 17 of the electric generator 4; a second opening 30 to enable access of the personnel to the protective compartment 24 from a compartment 31 delimited by the vertical support 2; and a third opening 32 to enable access of the personnel from the platform 25 to the protective compartment 24, or vice versa.

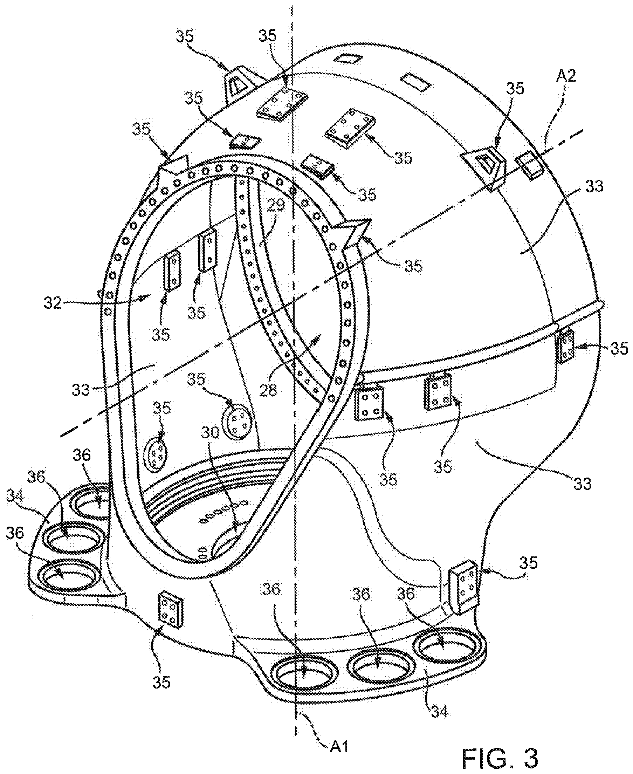

With reference to Figure 3, the supporting structure 23 includes supporting walls 33, which are made by casting; and two plates 34 which extend to the floor surface 26 and support the cogwheels 12 and the relative actuators 13 (Figure 2). The supporting structure 23 further comprises attacks 35, which are arranged along the inner and outer faces of the walls 33 and support the equipment not shown in the attached figures. A selectively removable panel, not shown in Figure 3, generally closes the opening 32.

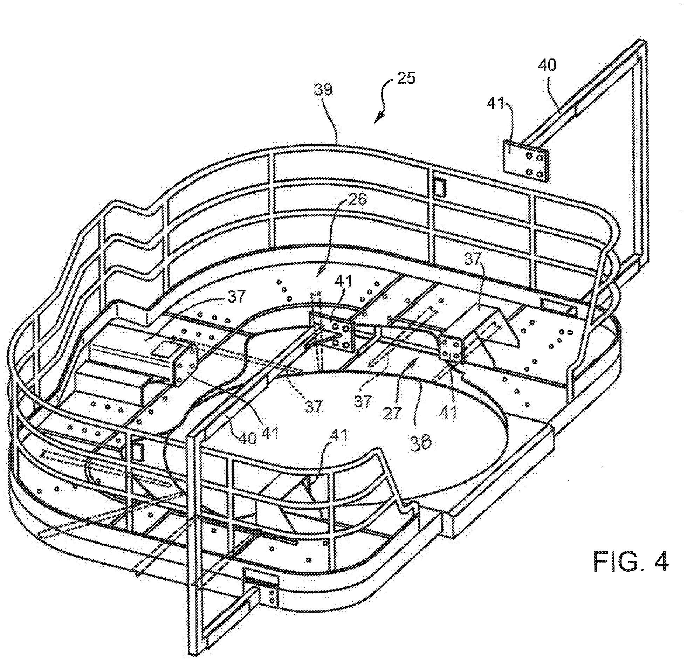

With reference to Figure 4, the platform 25 comprises a frame 37; the floor 26 mounted on the frame 37; a covering 38 arranged under the frame 37 and beside the frame 37; and a railing 39. The protective compartment 27 extends between the floor 26 and the covering 38. In particular, the floor 26 and the covering 38 are made by cover sheets having a sealing system to create a protective barrier for the fifth wheel 6, the annular gear 11 and the cogwheels 12, as best shown in figure 3.

The platform 25 is also provided with a water drain system. The same actuators 13 are provided with protective covers.

The frame 37 comprises two supports 40, which are arranged outside of the railing 39 and are configured to support respective heat exchangers 20. The frame 37 comprises a plurality of fastening interfaces 41 configured to be made integral with the supporting structure 23.

The protective compartment 27 houses the cogwheels 12 and, in part, the annular gear 11 (Figure 2). The protective compartment 27 is also adapted to house other sensitive parts not shown in the attached figures, such as the end parts of the detection and control systems for indexing the nacelle assembly 3 with respect to the vertical support 2 about the axis A1.

With reference to Figure 2, the power unit 16 of the braking system 8 and the pump 19 of the liquid cooling system 9 are housed in the protective compartment 24. The two air/liquid heat exchangers 20 are supported by the platform 25, are arranged on opposite sides of the supporting structure 23, and are spaced from the supporting structure 23.

The filter 22 of the air cooling system 10 occupies part of the opening 32, while the fan 21 is arranged in the protective compartment 22 facing the filter 24. The fan 21 pressurizes the protective compartment 24 to create air currents through the rotor 18 and the air gap between the rotor 18 and the stator 17.

Finally, it is evident that the present invention can be modified and varied without thereby departing from the scope of the appended claims.

In particular, in accordance with an embodiment not shown, the floor is provided with a defrost system by applying some electrical resistances or conveyors of hot air.

According to another embodiment not shown, the covers of the actuators 13 are equipped with a ventilation system and/or lightning systems which are integrated or subsequently applied.

In accordance with a further embodiment not shown, each cover can cover more actuators.

## Claims

1. A nacelle assembly for a wind turbine, the nacelle assembly (3) rotating at the top of a vertical support (2) and supporting an electric generator (4) and a blade assembly (5), and comprising a supporting structure (23) to transfer the loads between the blade assembly (5) and the vertical support (2) and to define a first protective compartment (24) for housing sensitive parts of the wind turbine (1); and a platform (25) integral with the supporting structure (23) and defining a floor (26) and a second protective compartment (27) for housing further sensitive parts of the wind turbine (1); and comprising a plurality of cogwheels (12) housed in the second protective compartment (27) and engaging an annular gear (11) which projects into the second protective compartment (27) and is integral with the vertical support (2).

2. The nacelle assembly as claimed in claim 1, wherein the supporting structure (23) is configured like a capsule and comprises a first opening (28) delimited by a flange (29) connecting the electric generator (4) to the supporting structure (23).

3. The nacelle assembly as claimed in claim 1 or 2, wherein the supporting structure (23) comprises a second opening (30) to enable access to the first protective compartment (24) from the vertical support (2); and a third opening (32) to enable access to the first protective compartment (24) from the floor (26) of the platform (25).

4. The nacelle assembly as claimed in any one of the preceding claims, wherein the supporting structure (23) comprises supporting walls (33), said supporting walls (33) preferably being produced by casting.

5. The nacelle assembly as claimed in any one of the preceding claims, wherein the supporting structure (23) comprises a plurality of connection interfaces (35), which extend in the first protective compartment (24) and on the outside of the first protective compartment (24).

6. The nacelle assembly as claimed in any one of the preceding claims, wherein the supporting structure (23) comprises two plates (34), which extend at the level of the floor (26) and are configured to support cogwheels (12) and respective actuators (13).

7. The nacelle assembly as claimed in any one of the preceding claims, wherein the platform (25) comprises a frame (37); the floor (26) mounted on the frame (37); and a covering (38) arranged beneath the frame (37), the second protective compartment (27) extending between the floor (26) and the covering (38).

8. The nacelle assembly as claimed in any one of the preceding claims, wherein the platform (25) comprises a plurality of further fastening interfaces (41) to fasten the platform (25) to the supporting structure (23).

9. A wind turbine for the generation of electrical energy, the wind turbine (1) comprising a vertical support (2), a nacelle assembly (3) as claimed in any one of the preceding claims and arranged at the top of the vertical support (2) so as to rotate about a first axis (A1); an electric generator (4) fitted on the nacelle assembly (3); and a blade assembly (5) fitted to rotate with respect to the nacelle assembly (3) about a second axis (A2).

10. The wind turbine as claimed in claim 9, and comprising an annular gear (11) with external teeth; the annular gear (11) being arranged at the top of the vertical support (2) and being at least partially housed in the second protective compartment (27).

11. The wind turbine as claimed in claim 9 or 10, and comprising a braking system (8) comprising a brake disc (14) and a plurality of callipers (15) arranged inside the vertical support (2); and a power unit (16) housed in the first protective compartment (24).

12. The wind turbine as claimed in any one of claims 9 to 10, and comprising a liquid cooling system (9) comprising a pump housed in the first protective compartment (24) and two heat exchangers (20) supported by the platform (25).

13. The wind turbine as claimed in any one of claims 9 to 12, and comprising an air cooling system (10), which comprises a fan (21) housed in the first protective compartment (24) and configured to suck in air from the outside of the supporting structure (23) and to pressurize the first protective compartment (24) so as to create air currents through the electric generator (4).

14. The wind turbine as claimed in any one of claims 9 to 13, wherein the electric generator (4) extends radially with respect to the first axis (A1) beyond the supporting structure (23) and delimits the platform (25) from the side of the blade assembly (5).

## Patentansprüche

1. Gondelanordnung für eine Windkraftanlage, wobei sich die Gondelanordnung (3) an der Spitze eines vertikalen Trägers (2) dreht und einen elektrischen Generator (4) und eine Flügelanordnung (5) trägt, und umfassend eine Trägerstruktur (23), welche die Lasten zwischen der Flügelanordnung (5) und dem vertikalen Träger (2) überträgt und ein erstes Schutzfach bzw. -raum (24) zum Aufnehmen empfindlicher Teile der Windkraftanlage (1) definiert; und eine Plattform (25), die integral mit der Trägerstruktur (23) ist und einen Boden (26) und ein zweites Schutzfach bzw. -raum (27) zum Aufnehmen weiterer empfindlicher Teile der Windkraftanlage (1) definiert; und umfassend eine Mehrzahl von Kammrädern (12), die in dem zweiten Schutzraum (27) untergebracht sind und in ein ringförmiges Zahnrad (11) eingreifen, das in das zweite Schutzfach (27) hineinragt und integral mit dem vertikalen Träger (2) ist.

2. Gondelanordnung nach Anspruch 1, wobei die Trägerstruktur (23) wie eine Kapsel konfiguriert ist und eine erste Öffnung (28) umfasst, die durch einen Flansch (29) begrenzt ist, der den elektrischen Generator (4) mit der Trägerstruktur (23) verbindet.

3. Gondelanordnung nach Anspruch 1 oder 2, wobei die Trägerstruktur (23) eine zweite Öffnung (30), um den Zugang zu dem ersten Schutzfach (24) von dem vertikalen Träger (2) aus zu ermöglichen; und eine dritte Öffnung (32) umfasst, um den Zugang zu dem ersten Schutzfach (24) von dem Boden (26) der Plattform (25) aus zu ermöglichen.

4. Gondelanordnung nach einem der vorhergehenden Ansprüche, wobei die Trägerstruktur (23) Trägerwände (33) umfasst, wobei die Trägerwände (33) vorzugsweise durch Gießen hergestellt sind.

5. Gondelanordnung nach einem der vorhergehenden Ansprüche, wobei die Trägerstruktur (23) eine Mehrzahl von Verbindungsschnittstellen (35) umfasst, die sich in dem ersten Schutzfach (24) und an der Außenseite des ersten Schutzfachs (24) erstrecken.

6. Gondelanordnung nach einem der vorhergehenden Ansprüche, wobei die Trägerstruktur (23) zwei Platten (34) umfasst, die sich auf der Ebene bzw. Höhe des Bodens (26) erstrecken und konfiguriert sind, Kammräder (12) und jeweilige Aktoren (13) zu tragen.

7. Gondelanordnung nach einem der vorhergehenden Ansprüche, wobei die Plattform (25) einen Rahmen (37); wobei der Boden (26) an dem Rahmen (37) montiert ist; und eine Abdeckung (38) umfasst, die unter dem Rahmen (37) angeordnet ist, wobei sich das zweite Schutzfach (27) zwischen dem Boden (26) und der Abdeckung (38) erstreckt.

8. Gondelanordnung nach einem der vorhergehenden Ansprüche, wobei die Plattform (25) eine Mehrzahl von weiteren Befestigungsschnittstellen (41) umfasst, um die Plattform (25) an der Trägerstruktur (23) zu befestigen.

9. Windkraftanlage zur Erzeugung von elektrischer Energie, wobei die Windkraftanlage (1) einen vertikalen Träger (2), eine Gondelanordnung (3), wie sie in einem der vorhergehenden Ansprüche beansprucht ist und die an der Spitze eines vertikalen Trägers (2) angeordnet ist, um sich um eine erste Achse (A1) zu drehen; einen elektrischen Generator (4), der an die Gondelanordnung (3) gepasst ist; und eine Flügelanordnung (5) umfasst, die dahingehend gepasst bzw. angebracht ist, sich in Bezug auf die Gondelanordnung (3) um eine zweite Achse (A2) zu drehen.

10. Windkraftanlage nach Anspruch 9, und umfassend ein ringförmiges Zahnrad (11) mit externen Zähnen; wobei das ringförmige Zahnrad (11) an der Spitze des vertikalen Trägers (2) angeordnet ist und zumindest teilweise in dem zweiten Schutzfach (27) untergebracht ist.

11. Windkraftanlage nach Anspruch 9 oder 10, und umfassend ein Bremssystem (8), das eine Bremsscheibe (14) und eine Mehrzahl von Bremssätteln (15), die innerhalb des vertikalen Trägers (2) angeordnet sind; und eine Leistungseinheit (16) umfasst, die in dem ersten Schutzfach (24) untergebracht ist.

12. Windkraftanlage nach einem der Ansprüche 9 bis 10, und umfassend ein Flüssigkeitskühlsystem (9), das eine Pumpe, die in dem ersten Schutzfach (24) untergebracht ist, und zwei Wärmetauscher (20) umfasst, die durch die Plattform (25) getragen sind.

13. Windkraftanlage nach einem der Ansprüche 9 bis 12, und umfassend ein Luftkühlsystem (10), das einen Ventilator (21) umfasst, der in dem ersten Schutzfach (24) untergebracht ist und konfiguriert ist, Luft von der Außenseite der Trägerstruktur (23) anzusaugen und das erste Schutzfach (24) mit Druck zu beaufschlagen, um Luftströme durch den elektrischen Generator (4) zu erzeugen.

14. Windkraftanlage nach einem der Ansprüche 9 bis 13, wobei sich der elektrische Generator (4) radial in Bezug auf die erste Achse (A1) jenseits der Trägerstruktur (23) erstreckt und die Plattform (25) von der Seite der Flügelanordnung (5) ab- bzw. begrenzt.

## Revendications

1. Ensemble nacelle pour une éolienne, l'ensemble nacelle (3) tournant au sommet d'un support vertical (2) et supportant un générateur électrique (4) et un ensemble de pales (5), et comprenant une structure de support (23) pour transférer les charges entre l'ensemble de pales (5) et le support vertical (2) et pour définir un premier compartiment de protection (24) pour loger les parties sensibles de l'éolienne (1) ; et une plate-forme (25) solidaire de la structure de support (23) et définissant un plancher (26) et un second compartiment de protection (27) pour loger d'autres parties sensibles de l'éolienne (1) ; et comprenant une pluralité de roues dentées (12) logées dans le second compartiment de protection (27) et engageant un engrenage annulaire (11) qui fait saillie dans le second compartiment de protection (27) et est solidaire du support vertical (2).

2. Ensemble nacelle selon la revendication 1, dans lequel la structure de support (23) est configurée comme une capsule et comprend une première ouverture (28) délimitée par une bride (29) reliant le générateur électrique (4) à la structure de support (23).

3. Ensemble nacelle selon la revendication 1 ou 2, dans lequel la structure de support (23) comprend une deuxième ouverture (30) pour permettre l'accès au premier compartiment de protection (24) depuis le support vertical (2) ; et une troisième ouverture (32) pour permettre l'accès au premier compartiment de protection (24) depuis le plancher (26) de la plate-forme (25).

4. Ensemble nacelle tel que revendiqué dans l'une quelconque des revendications précédentes, dans lequel la structure de support (23) comprend des parois de support (33), lesdites parois de support (33) étant de préférence produites par coulée.

5. Ensemble nacelle selon l'une quelconque des revendications précédentes, dans lequel la structure de support (23) comprend une pluralité d'interfaces de connexion (35), qui s'étendent dans le premier compartiment de protection (24) et sur l'extérieur du premier compartiment de protection (24).

6. Ensemble nacelle tel que revendiqué dans l'une quelconque des revendications précédentes, dans lequel la structure de support (23) comprend deux plaques (34), qui s'étendent au niveau du plancher (26) et sont configurées pour supporter des roues dentées (12) et des actionneurs respectifs (13).

7. Ensemble nacelle tel que revendiqué dans l'une quelconque des revendications précédentes, dans lequel la plate-forme (25) comprend un cadre (37) ; le plancher (26) monté sur le cadre (37) ; et un habillage (38) disposé sous le cadre (37), le second compartiment de protection (27) s'étendant entre le plancher (26) et l'habillage (38).

8. Ensemble nacelle tel que revendiqué dans l'une quelconque des revendications précédentes, dans lequel la plate-forme (25) comprend une pluralité d'autres interfaces de fixation (41) pour fixer la plate-forme (25) à la structure de support (23).

9. Une turbine d'éolienne pour la production d'énergie électrique, la turbine éolienne (1) comprenant un support vertical (2), un ensemble nacelle (3) tel que revendiqué dans l'une quelconque des revendications précédentes et disposé au sommet du support vertical (2) de manière à tourner autour d'un premier axe (A1) ; un générateur électrique (4) monté sur l'ensemble nacelle (3) ; et un ensemble de pales (5) monté pour tourner par rapport à l'ensemble nacelle (3) autour d'un second axe (A2).

10. Éolienne selon la revendication 9, et comprenant un engrenage annulaire (11) avec des dents externes ; l'engrenage annulaire (11) étant disposé au sommet du support vertical (2) et étant au moins partiellement logé dans le second compartiment de protection (27).

11. Éolienne selon la revendication 9 ou 10, et comprenant un système de freinage (8) comprenant un disque de frein (14) et une pluralité d'étriers (15) disposés à l'intérieur du support vertical (2) ; et une unité de puissance (16) logée dans le premier compartiment de protection (24).

12. Éolienne selon l'une des revendications 9 à 10, et comprenant un système de refroidissement liquide (9) comprenant une pompe logée dans le premier compartiment de protection (24) et deux échangeurs de chaleur (20) supportés par la plate-forme (25).

13. Éolienne selon l'une quelconque des revendications 9 à 12, et comprenant un système de refroidissement à air (10), qui comprend un ventilateur (21) logé dans le premier compartiment de protection (24) et configuré pour aspirer l'air de l'extérieur de la structure de support (23) et pour pressuriser le premier compartiment de protection (24) afin de créer des courants d'air à travers le générateur électrique (4).

14. Éolienne selon l'une quelconque des revendications 9 à 13, dans laquelle le générateur électrique (4) s'étend radialement par rapport au premier axe (A1) au-delà de la structure de support (23) et délimite la plate-forme (25) du côté de l'ensemble de pales (5).
